# EUROPEAN PATENT APPLICATION

(11) **EP 3 133 526 A1**
(43) Date of publication of application: **22.02.2017**
(21) Application number: 15780397.4
(22) Date of filing: 13.04.2015
(51) Int. Cl.: G06K 7/14, G06K 7/10

(54) **IDENTIFICATION SYSTEM**

(30) Priority: 17.04.2014 JP 2014085064; 18.12.2014 JP 2014256743
(71) Applicant: Mizuno, Yoshiro, Tokyo 113-0034 (JP)
(72) Inventor: Mizuno, Yoshiro, Tokyo 113-0034 (JP)
(74) Representative: Rüger, Barthelt & Abel
(86) International application number: PCT/JP2015/061304
(87) International publication number: WO 2015/159833

(57) **Abstract**

A technical problem to be solved by the present disclosure is to provide an identification system which utilizes an identification tag that stores multiple authentication factors identifies, through a camera or video image, an identification object, and accomplishes higher level identification accuracy and security in comparison with those of conventional technologies. Encrypted display information is generated using a unique factor registered in advance in a predetermined external list, and a composite text externally obtained, or internally retained, information is displayed by an identification tag as a two-dimensional code or a hologram, and the displayed information is read by a camera or a video. Through multi-factor authentication, whether the identification object carrying the identification tag is a registered identification object or a non-registered object is identified.

## Description

### Technical Field

The present disclosure relates to an identification system utilizing a recognition tag, and more particularly, to an identification system that obtains, through a camera or a video image, information indicated on the identification tag, and performs multi-factor authentication.

In this case, the multi-factor authentication is an authentication to enhance a security level by combining at least two factors from among the following: a unique factor like an identification (ID) that is unique to an identification object, hard-to-replicate factors that have identification objects which are externally obtained, or retained internally.

### Background Art

Recently, from a standpoint of security enhancement, identification systems utilizing recognition tags of Radio Frequency Identification (RFID) have been widely adopted. However, since the RFID systems are operated with non-contact IC cards with a short communication range, the RFID systems are not suited for identifying multiple identification candidates that are located across a relatively wide area. There is a problem in the RFID systems such that, when a longer communicable range is applied, a single RFID tag is read by multiple readers/writers simultaneously, thereby making the operation difficult.

### Citation List

### Patent Literature

Patent Literature 1 discloses an interrogator (a reader/writer) and a responder (a tag) which do not require a user to place the tag over the reader/writer, and to touch the reader/writer with the tag while holding the tag in hand by utilizing the characteristics that the RFID tag enables a longer-distance communication than the non-contact IC card, and which enables the user to enter or exit by, for example, simply hanging the tag around the user's neck, thereby improving the user's convenience, or an entry-exit managing system that is accomplished with such an interrogator and a responder.

This system includes interrogators and responders which have respective unique identifiers, and perform wireless communication therebetween. The interrogators are stationary disposed on, for example, a floor and a wall, and the responders are stationary disposed within a communicable range with the interrogator, and the other responders are disposed on moving objects like humans. A space is formed between the interrogator and the stationary disposed responder so as to allow the moving object or a movable object on which the moving responder is disposed to stop, suspend, move, and pass therethrough, and an operation process is performed in accordance with a change in communication status, as well as communication details caused by the object on which the moving responder is disposed and which moves within the space.

However, Patent Literature 1 discloses a single-factor authentication based on a unique identifier, and thus there remains a security problem of identity theft.

In addition, as for the tracking of the movements of the identification object caused by a change in communication status, the tracking accuracy cannot be regarded as accurate. For example, there is also a problem such that a gate and the like can be easily passed if a person goes with another person carrying a responder that functions as the identification tag.

Patent Literature 1: Unexamined Japanese Patent Application Kokai Publication No. 2006-072672

### Summary of Invention

### Technical Problem

A technical problem to be solved by the present disclosure is to provide an identification system which utilizes an identification tag that stores multiple authentication factors identifies, through a camera or video image, an identification object, and accomplishes higher level identification accuracy and security in comparison with those of conventional technologies.

### Solution to Problem

In accordance with a first aspect of the present disclosure, there is provided an identification system including:
with using an identification tag including display means for displaying encrypted information as a two-dimensional code or a hologram using:
   a) a unique factor registered in a predetermined external list in advance; and
   b) one or a plurality of factors obtained by at least one means selected from the following: locational factor obtaining means for measuring a local location upon a predetermined trigger; height factor input means for inputting a height of an identification object; and biometric factor collecting means for collecting biometric information of the identification object,
wherein the identification system:
   reads the identification tag by a camera or a video; and
   identifies, through a multi-factor authentication, whether the identification object is a registered object or a non-registered object.

In accordance with a second aspect of the present disclosure, there is provided an identification system including:
with using an identification tag that displays encrypted information as a two-dimensional code or a hologram using a unique factor registered in a predetermined external list in advance; and a composite text that is externally obtained, or internally retained information,
wherein the identification system:
   reads the displayed information by a camera or a video; and
   identifies, through a multi-factor authentication, whether the identification object carrying the identification tag is a registered object or a non-registered object.

In this case, the identification tag may include display means for displaying encrypted information as a two-dimensional code or a hologram using:
a) the unique factor registered in the predetermined external list in advance; and
b) one or a plurality of factors selected from the following: a composite text composed from a current time obtained from a built-in clock or an external clock, a composite text composed from a current local location measured upon a predetermined trigger, a composite text composed from a height of the identification object measured in advance, and a composite text composed from biometric information collected by biometric information collecting means.

The composing operation from the current time may be performed based on a hash function that generates a new hash value in accordance with a time schedule table or a time interval stored in the identification tag, and the multi-factor authentications may include authentication using the hash value that changes in accordance with the time schedule table or the time interval.

The identification system may further include, display means for performing a highlight display of the non-registered object by superimposing the non-registered object on a current location of the non-registered object in an area where an identification candidate is present, and target recording means for recording the non-registered object as a target for a predetermined action.

The display means may include an LCD, an LED, an ELD, electronic paper, or a holographic display.

Note that an LCD stands for a Liquid Crystal Display, an LED stands for a Light Emitting Diode, and an ELD stands for an Electro Luminescent Display.

### Brief Description of Drawings

FIG. 1 is an overall view illustrating a hall into which an identification system of the present disclosure is introduced;
FIG. 2 is an external view of an identification tag;
FIG. 3 is a block diagram illustrating a functional structure of the identification tag;
FIG. 4 illustrates a structure of the identification tag when authentication information containing a locational factor is adopted;
FIG. 5 illustrates a structure of the identification tag when the authentication information containing a height factor is adopted;
FIG. 6 illustrates a structure of the identification tag when the authentication information containing a biometric factor is adopted;
FIG. 7 is a block diagram illustrating a functional structure of an identification device;
FIG. 8 illustrates a display screen showing a hall that is displayed on a browser terminal connected with the identification device; and
FIG. 9 illustrates the display screen showing a game field displayed on the browser terminal connected with the identification device.

### Description of Embodiments

Hereinafter, embodiments to carry out the present disclosure will be described with reference to the accompanying figures. An operation of a functional structure block such as an identification tag, an identification device, and the like exemplified in this specification are realized by causing a predetermined processor circuit to execute control programs like pre-programmed firmware, and to work in cooperation with various equipped devices. In addition, these programs are recorded in a non-transitory computer-readable recording medium, read from the non-transitory recording medium by the processor. Furthermore, these programs are executed upon user operation or receipt of a signal from a device included in a system as a trigger.

### First Embodiment

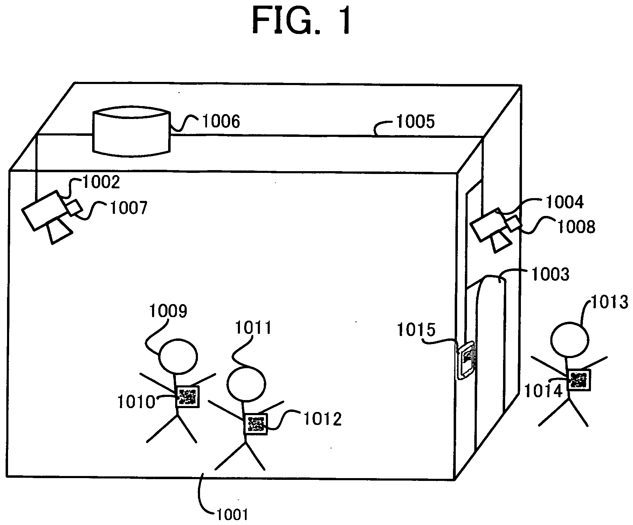

FIG. 1 is an overall view illustrating a hall into which an identification system of the present disclosure is introduced. Provided in a hall 1001 is a first camera 1002 monitoring the interior of the hall. A second camera 1004 is provided on an entrance gate 1003 to the hall. These cameras have light emitters 1007 and 1008, respectively. Although a camera image is a movie, a still image may be adopted. The first camera, the second camera, and the entrance gate are connected with an identification device 1006 via a communication line 1005. Identification candidates 1009 and 1011 are located in the hall, and carry identification tags 1010 and 1012, respectively, on their bodies. Images of both candidates are picked up by the first camera 1002. There is another identification candidate 1013 outside the entrance gate 1003 who carries an identification tag 1014 on his or her body. The image of this person is picked up by the second camera 1004. The camera images from the first and second cameras are transmitted to the identification device 1006 via the communication line 1005. A registration terminal 1015 enables the identification object not registered yet to register an own ID in a list possessed beforehand in the identification device 1006, and to receive messages. In this case, the own ID is a unique factor that is unique to the identification object, and is a factor for uniquely identifying the identification candidate.

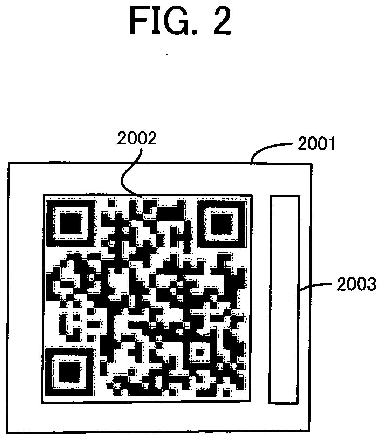

FIG. 2 is an external view of the identification tag. The identification tags 1006, 1008, and 1010 carried by the three identification candidates are all consistent. Electronic paper 2002, and a light receiver 2003 are disposed on a surface of a plate-shaped casing 2001. Pieces of encrypted information (hereinafter, referred to as authentication information) are indicated on the electronic paper 2002 as a two-dimensional barcode. The two-dimensional barcode is picked up by the first or second camera, and the camera image is decrypted and authenticated by an identification device 2004, thereby identifying whether the identification candidate is a registered person or a non-registered person. The light receiver 2003 receives optical signals that are output by a light emitter of the camera.

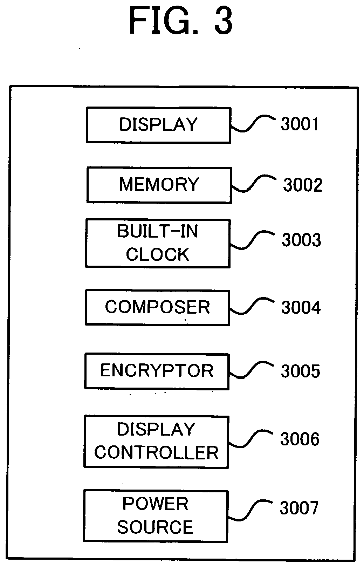

FIG. 3 is a block diagram illustrating a functional structure of the identification tag. A display 3001 includes electronic paper, and displays the authentication information as the two-dimensional barcode. Normally, the display is turned OFF, and a display controller to be discussed later is set to turn ON the display as needed. Although the electronic paper is utilized as the display, the display of the present disclosure is not limited to the electronic paper. An LCD, an LED, an ELD, or a holographic display is applicable. A memory 3002 stores the own ID, a hash function to be discussed later, and a hash value that changes in accordance with this hash function. In this case, the own ID is a unique code issued to each person who has already been registered. A built-in clock 3003 is a clock that is synchronized with a built-in clock of the identification device 1006 to be discussed later. Although the built-in clock is applied, a time may be obtained through external GPS signals. A composer 3004 refers to the built-in clock 3003 for a current time, and composes a new hash value based on the predetermined hash function at set time intervals. An encryptor 3005 uses the aforementioned hash value and the own ID stored in the memory 3002 to obtain encrypted two-factor information. A display controller 3006 includes the light receiver 2003 as a component, and further changes the two-factor information into the two-dimensional barcode and displays this barcode upon receipt of specific optical signal by the light receiver as a trigger. A power source 3007 includes batteries.

Although a new hash value is composed on the time interval basis, the composing timing by the present disclosure is not limited to such time intervals, and other schemes may be adopted, such as to compose the new hash value in accordance with a time schedule table with irregular time intervals.

The structure of the authentication information applicable to the present disclosure is not limited to the structure which contains the time factor and the own ID serving as the unique factor utilized in the first embodiment. Hereinafter, modified examples of applicable authentication information will be described.

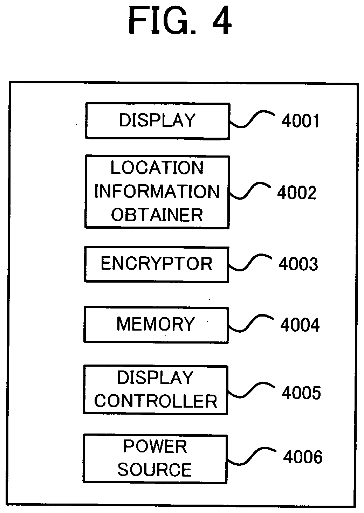

(First Modified Example: Authentication Information Containing Locational Factor) FIG. 4 illustrates a structure of the identification tag when authentication information containing a locational factor is adopted. A display 4001 is the same as that of the first embodiment. A location information obtainer 4002 measures a local location at a predetermined timing. In this case, a structure of obtaining a three-dimensional coordinate from an internal GPS system is applied. An encryptor 4003 utilizes a composite text composed from this current local location, and the own ID held in a memory 5004 to obtain encrypted two-factor information. A memory 4004 stores the two-factor information as the authentication information. A display controller 4005 is the same as that of the first embodiment. A power source 4006 is the same as that of the first embodiment.

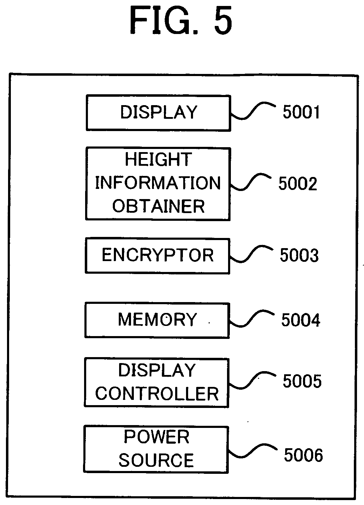

(Second Modified Example: Authentication Information Containing Height Factor) FIG. 5 illustrates a structure of the identification tag when authentication information containing a height factor is adopted. A display 5001 is the same as that of the first embodiment. A height information obtainer 5002 measures the height of the identification object beforehand, and stores this measurement in the memory 5004. An encryptor 5003 utilizes a composite text composed from this height information, and the own ID contained in the memory 5004 to obtain encrypted two-factor information. A memory 5004 stores the two-factor information as the authentication information. A display controller 5005 is the same as that of the first embodiment. A power source 5006 is the same as that of the first embodiment.

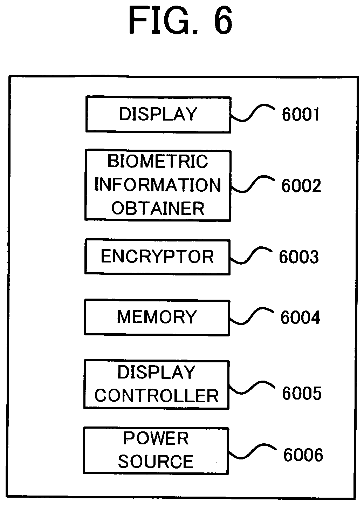

(Third Modified Example: Authentication Information Containing Biometric Factor) FIG. 6 illustrates a structure of the identification tag when authentication information containing a biometric factor is adopted. A display 6001 is the same as that of the first embodiment. A biometric information obtainer 6002 picks up an iris image of the identification object beforehand, and stores this information in the memory 6004. An encryptor 6003 utilizes a composite text composed from the iris image, and the own ID contained in the memory 6004 to obtain encrypted two-factor information. The memory 6004 stores the two-factor information as the authentication information. A display controller 6005 is the same as that of the first embodiment. A power source 6006 is the same as that of the first embodiment.

The authentication information according to the present disclosure is not limited to the above modified examples that display two-factor information, and multi-factor information for displaying equal to or greater than three factors of the first embodiment as well as the modified examples is also applicable. For example, a combination may be set in which the timing at which the local location is measured in the first modified example is controlled so as to follow predetermined time intervals or a time schedule table, and the location of the candidate is synchronized at the side where the authentication is performed, and three factors including such a combination with the own ID may be obtained.

(Functional Structure of Identification Device) Returning back to the first embodiment, the explanation will be given further.

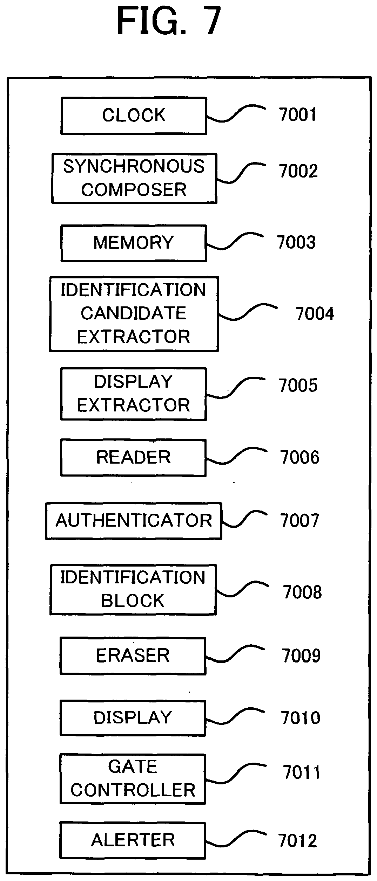

FIG. 7 is a block diagram illustrating a functional structure of the identification device 1006.

A clock 7001 is a built-in clock that is synchronized with the built-in clock of the identification tag.

A synchronous composer 7002 has a composer function that carries out the same operation as that of the composer 3004 of the identification tag, refers to the clock 7001 for a current time, and composes a new hash value in synchronization with the operation of the identification tag.

A memory 7003 stores the aforementioned hash value, and the own ID registered in advance as the unique factor.

An identification candidate extractor 7004 applies a known human shape extraction algorithm in the art to extract the identification candidates from the camera images obtained by the first camera and the second camera, and creates a list of the candidates.

A display extractor 7005 searches, in the image of the identification candidate, a field that shows the two-dimensional barcode.

A reader 7006 decodes the code of the extracted two-dimensional barcode, and reads the two-factor information that becomes the authentication information.

An authenticator 7007 executes two-factor authentication for the two-factor information that is the read result. In this case, the authentication is performed by checking the own ID and the hash value read from the decoded two-factor information with the own ID and the hash value stored in the memory 7002. When the authentication is successful, the object is determined as a registered object or otherwise determined as a non-registered object.

An identification block 7008 distinguishes the determined object between the registered object and the non-registered object, and identifies the object together with the location.

When a preset unit time elapses, or an event occurs, an eraser 7009 performs an erasing operation for the own ID of the identified registered object. When the registered object is detected multiple times during the erasing operation, the eraser transmits an alert signal to an alerter 7012.

A display 7010 displays, for a browser connected with the identification device, sections that indicate the hall, and displays the registered object and the non-registered object in a manner superimposed on the locations corresponding to the respective current locations. In this case, the non-registered object is highlighted.

When detecting through the camera image that the registered object has approached the entrance gate within a predetermined range, a gate controller 7011 transmits a gate unlocking signal to the entrance gate, thereby unlocking the entrance gate.

When detecting through the camera image that both the registered object and the non-registered object have approached the entrance gate within the predetermined range or when receiving the alert signal, the alerter 7012 performs a predetermined alerting operation to a preset contact like an operator. In this case, the alerting operation is to send an e-mail alert to an e-mail address of the preset operator.

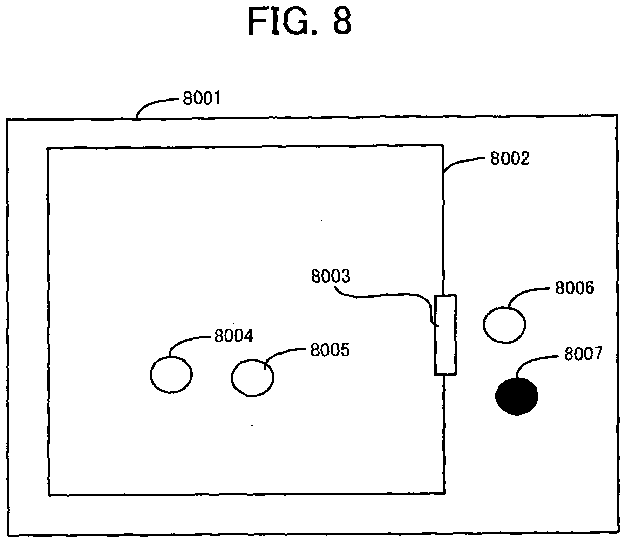

FIG. 8 illustrates a display screen showing the hall that is displayed on the browser terminal connected with the identification device.

A display screen 8001 displays a hall 8002 like a plan view.

Reference numeral 8003 denotes an entrance gate.

Reference numerals 8004, 8005, and 8006 denote respective registered objects.

Reference numeral 8007 denotes a highlighted non-registered object. In the figure, since both the registered object 8006 and the non-registered object 8007 are approaching the entrance gate, when detecting through the camera image that the objects are within the preset range, the alerter 7008 performs the alerting operation.

### Second Embodiment

In a second embodiment, the identification system is applied to a mock-war field-game playing field.

The explanation will be given only of the structures that are different from those of the first embodiment. In this embodiment, the identification tag is not a chest badge as described in the first embodiment, but is put in a helmet. The identification tag put in the helmet includes a sweat analyzer device. A part of DNA information is extracted as the biometric information through a polymerase chain reaction (PCR) method to compose a composite text based on the biometric information. The composite text is utilized as a factor for the multi-factor authentication.

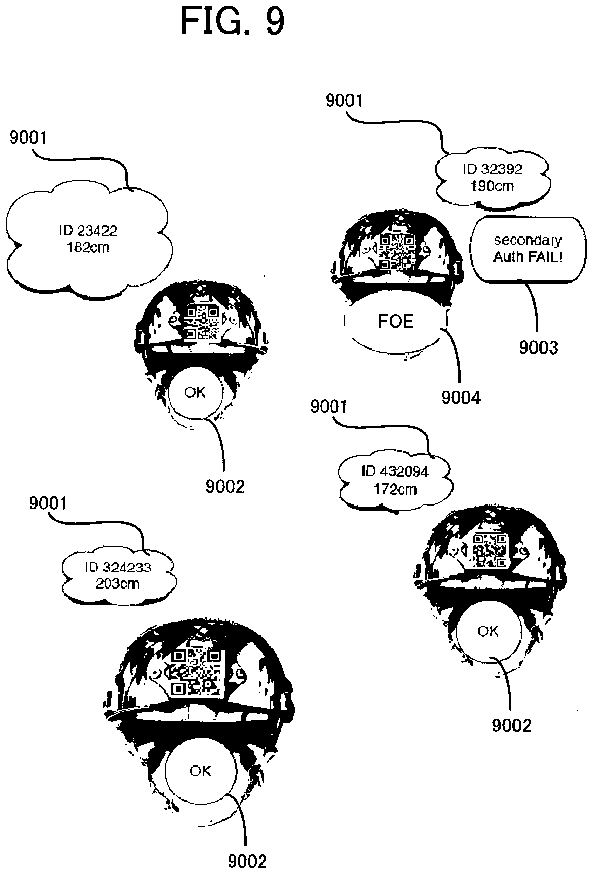

FIG. 9 illustrates a display screen showing the field-game playing field that is displayed on a browser terminal connected with the identification device. For the reality of the game, the read information and the identification result are displayed in a manner superimposed on actual scenes.

Four balloon indications with a reference numeral 9001 each show the own ID and the height which are the read information.

Three normal indications with a reference numeral 9002 each show, "OK", meaning successful authentication.

A label indication with a reference numeral 9003 shows a failure in the authentication of the read information.

A highlighted indication with a reference numeral 9004 shows, "FOE", meaning non-registered object.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

The present application claims the benefit of priority based on Japanese Patent Application No. 2014-085064 and Japanese Patent Application No. 2014-256743, the entire contents of which are hereby incorporated by reference in this specification.

### Industrial Applicability

The present disclosure is applicable to various facilities where entry-exit management is needed, and to a field-game playing field, a conflict area, and the like where identification friend or foe is needed.

### Reference Signs List

- 1001: Hall
- 1002: First camera
- 1003: Entrance gate
- 1004: Second camera
- 1006: Identification device

## Claims

1. An identification system comprising:
with using an identification tag comprising display means for displaying encrypted information as a two-dimensional code or a hologram using a) a unique factor registered in a predetermined external list in advance; and b) one or a plurality of factors obtained by at least one means selected from the following: locational factor obtaining means for measuring a local location upon a predetermined trigger; height factor input means for inputting a height of an identification object; and biometric factor collecting means for collecting biometric information of the identification object,
wherein the identification system:
reads the identification tag by a camera or a video; and
identifies, through a multi-factor authentication, whether the identification object is a registered object or a non-registered object.

2. The identification system according to claim 1, wherein:
the identification tag comprises display controlling means for displaying data upon receipt of a specific optical signal, electromagnetic signal, or sound wave signal as a trigger; and
the data is normally hidden, and the data is displayed upon the receipt.

3. The identification system according to claim 1 or claim 2, further comprising:
reading means for executing reading of the two-dimensional code or hologram in a camera or video image containing a candidate of the identification object,
wherein the multi-factor authentication is executed on the reading result, and determines whether the candidate of the identification object is the registered object or the non-registered object.

4. The identification system according to claim 3, wherein an erasing operation is performed as needed on the unique factor that is registered in the external list for the determined registered object when a unit time elapses, or an event occurs, and an alerting is performed when the identification system detects that the registered object is detected multiple times.

5. The identification system according to claim 3, further comprising:
display means for performing a highlight display of the non-registered object by superimposing the non-registered object on a current location of the non-registered object in an area where the identification candidate is present; and
target recording means for recording the non-registered object as a target for a predetermined action.

6. The identification system according to claim 3, further comprising a gate that is unlocked when, in the camera or the video image, that the registered object has approached the gate is detected.

7. The identification system according to claim 6, further comprising alerting means for giving an alert to an operator without unlocking the gate when detecting, in the camera or the video image, that both the registered object and the non-registered object have approached the gate.

8. The device according to claim 1, wherein the display means comprises an LCD, an LED, an ELD, electronic paper, or a holographic display.

9. The device according to claim 1, wherein the display means comprises a battery.

10. The device according to claim 1, wherein the display means displays the information by a visible light beam, an infrared ray, or an ultraviolet ray.

11. The device according to claim 2, wherein the optical signal, the electromagnetic signal, or the sound wave signal is to transmit a password or authentication information for a plurality of authentications, and the display of the data is executed upon authentication of the transmitted information.

12. An identification system comprising:
with using an identification tag comprising display means for displaying encrypted information as a two-dimensional code or a hologram using a) a unique factor registered in a predetermined external list in advance; and b) one or a plurality of factors selected from the following: a composite text composed from a current time obtained from a built-in clock or an external clock, a composite text composed from a current local location measured upon a predetermined trigger, a composite text composed from a height of an identification object measured in advance, and a composite text composed from biometric information collected by biometric information collecting means,
wherein the identification system:
reads the identification tag by a camera or a video; and
identifies, through a multi-factor authentication, whether an identification candidate is a registered object or a non-registered object.

13. The system according to claim 12, wherein:
the composing operation from the current time is performed based on a hash function that generates a new hash value in accordance with a time schedule table or a time interval stored in the identification tag; and
the multi-factor authentication includes authentication using the hash value that changes in accordance with the time schedule table or the time interval.
